# EUROPEAN PATENT SPECIFICATION

(11) **EP 3 950 394 B1**
(45) Date of publication and mention of the grant of the patent: **18.10.2023**
(21) Application number: 21154684.1
(22) Date of filing: 02.02.2021
(51) Int. Cl.: B60J 5/10

(54) **PLASTIC TAILGATE STRUCTURE AND AUTOMOBILE**
HECKKLAPPENSTRUKTUR AUS KUNSTSTOFF UND KRAFTFAHRZEUG
STRUCTURE DE HAYON EN PLASTIQUE ET AUTOMOBILE

(30) Priority: 06.08.2020 CN 202021615580 U; 06.08.2020 CN 202010782159
(43) Date of publication of application: 09.02.2022
(73) Proprietor: Yanfeng Plastic Omnium Automotive Exterior Systems Co., Ltd., Shanghai 201805 (CN); Yanfeng Plastic Omnium YiZheng Automotive Exterior Systems Co., Ltd., Jiangsu 211400 (CN); Compagnie Plastic Omnium SE, 69007 Lyon (FR)
(72) Inventor: ZHU, Xiaojun, SHANGHAI, 201805 (CN); WANG, Yilun, SHANGHAI, 201805 (CN); CARRIER, Pascal, 01150 SAINTE-JULIE (FR); COUDRON, Philippe, 01150 SAINTE-JULIE (FR)
(74) Representative: LLR

(56) References cited:
- WO-A1-2016/016578
- JP-A- 2018 154 155
- JP-B2- 6 410 738
- US-A1- 2015 210 147

## Description

### Field of the Invention

The invention relates to the field of automobile parts, and more particularly, relates to a plastic tailgate structure for automobile comprising an inner panel joined with a cover part of the tailgate, such as a tailgate outer panel, a spoiler outer panel or a lateral upright outer panel.

### Background of the Invention

Currently, an automobile tailgate structure generally comprises an inner panel and an outer panel, the joining between the perimeter of the two panels is realized by means of gluing and a cavity area is formed between the inner and outer panels, for example the back door as described in the documents JP2018154155 A or US2015/210147 A1. Due to reasons of structure and style, the distance between the outer panel and the inner panel in the cavity area is usually too large, which will cause the tailgate structure's overall modal behaviour and this area's denting stiffness to decrease. In order to meet denting stiffness and modal behaviour requirements, generally a set of glued joining walls is provided in the cavity area. Currently, conventional joining walls between the inner and outer panels are formed by making the main wall of the inner panel itself protrude at a plurality of locations inwardly in the cavity area and extend all the way to be close to the tailgate outer panel, so as to form joining walls to be joined with the outer panel by gluing. However, this kind of structure will occupy a large space of the surface of the inner panel. Moreover, the joining walls cause changes to the inner panel, especially the surface of the inner panel is not flat in the areas where the joining member is located, but is concave inwardly towards the cavity area and might have more surface quality defects such as shrinkage marks due to the joining walls. In addition, the joining walls are relatively thick and cannot easily break to perform a function of supplemental energy absorption in a high speed collision, so that the tailgate structure could generally break in such case.

### Summary of the Invention

The invention provides a plastic tailgate structure for automobile, wherein a joining member is provided between an inner panel and a cover part of the tailgate, such as a tailgate outer panel, a spoiler outer panel or a lateral upright outer panel, which effectively reduces the surface quality defects of the inner panel, increases this area's denting stiffness, increases the modal behaviour, and performs a function of energy absorption during a collision.

An aspect of the invention provides a plastic tailgate structure for automobile, comprising an inner panel and a cover part of the tailgate which are joined with each other, characterized in that on a surface of the inner panel is provided a joining member comprising a first joining plate connected with the inner panel and a second joining plate joined with the cover part of the tailgate, in that the first joining plate is integrally formed with the second joining plate in a general L-shape with an almost right angle between them, in that the joining member is further provided with at least a first reinforcing rib and a second reinforcing rib which are both connected with the first joining plate and the second joining plate, and in that the first joining plate is further provided with at least a third joining plate, two opposite ends of the third joining plate being connected respectively with the second reinforcing rib and the inner panel.

Further, the cover part of the tailgate joined with the inner panel can be a tailgate outer panel, a spoiler outer panel or a lateral upright outer panel of the tailgate.

Further, the first joining plate is joined with or integrally formed with the inner panel, preferably at a foot end of the first joining plate and/or at an end of the first joining plate which is opposite to the end of the first joining plate where the first joining plate is connected with the second joining plate.

Further, the first joining plate is joined with the inner panel by gluing, or the first joining plate is integrally formed with the inner panel by moulding.

Further, the second joining plate is joined with the cover part of the tailgate by gluing.

Further, the thickness of the joining member is smaller than that of a main wall of the inner panel, so that the joining member is easier to break in a high speed collision of the automobile than the inner panel.

Further, the joining member comprises at least one weak area which is a local area where the joining member is thinned or cut open. By "thinned", those skilled in the art understand it means that there still leaves a reduced thickness of plastic material in the weak area. By "cut open", those skilled in the art understand it means that the plastic material of the joining member is no longer continuous in the weak area. If some plastic material of the joining member is cut off when the joining member is cut to make the weak area, the weak area will be in a groove shape where there leaves no plastic material in the weak area, in other words, the thickness of the plastic material in the weak area will be null. As a result, the joining member can easily break along the weak area in a high speed collision of the automobile. The weak area could be at any suitable location and along any suitable direction on the joining member, and not necessarily run through a dimension of the joining member.

According to an embodiment, the first joining plate is thinned in a first weak area where the first joining plate is connected with the inner panel, so as to further reduce surface quality defects such as shrinkage marks on the inner panel.

According to another embodiment, the third joining plate comprises a weak area over at least a part of the width of the third joining plate.

Further, the number of the joining member is two and they are provided symmetrically at two sides of the tailgate inner panel.

Another aspect of the invention provides an automobile, comprising the above-described plastic tailgate structure.

In the plastic tailgate structure and automobile provided by the invention, by means of the joining member provided in the cavity between the inner panel and the cover part of the tailgate (such as the tailgate outer panel) and contributing to join the two with each other, the denting stiffness of the cavity area and the overall modal behaviour of the whole structure are increased; by providing the at least one weak area on any plate or rib of the joining member, when a high speed collision happens, the joining member can easily break along the weak area, reducing the degree of damage to the inner panel and thus performing a function of energy absorption.

### Brief Description of the Drawings

Figure 1 is an exploded view of a plastic tailgate structure provided by an embodiment of the invention;
Figure 2 is a sectional view of a plastic tailgate structure provided by an embodiment of the invention;
Figure 3 is an enlarged view of the detail A of Figure 1;
Figure 4 is a schematic structural view of a joining member provided by an embodiment of the invention;
Figure 5 is a view from the right of Figure 4;
Figure 6 is a schematic structural view of a joining member with a first weak area provided by an embodiment of the invention;
Figure 7 is a schematic structural view of a joining member provided by an embodiment of the invention when the first joining plate is locally cut open over a part of its height;
Figure 8 is a schematic structural view of a joining member provided by an embodiment of the invention when the third joining plate is locally thinned over a part of its width;
Figure 9 is a schematic structural view of a joining member provided by an embodiment of the invention when the third joining plate is locally cut open over a part of its width.

### Reference Signs:

1: tailgate outer panel;
2: tailgate inner panel;
3: glue;
4: joining member;
41: first joining plate;
411: first weak area;
42: second joining plate;
43: first reinforcing rib;
44: second reinforcing rib;
45: third joining plate;
451: second weak area.

### Detailed Description of Preferred Embodiments

Below, in connection with the accompanying drawings, preferred embodiments of the invention are provided and described in detail.

### Embodiment 1:

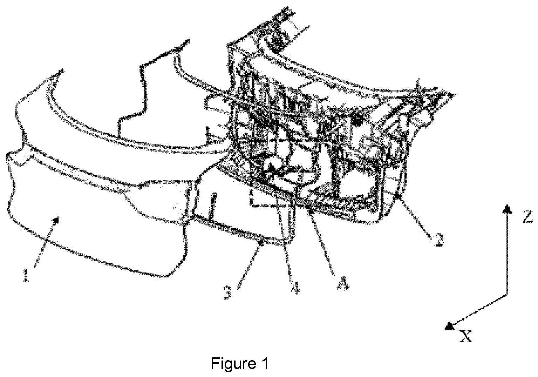

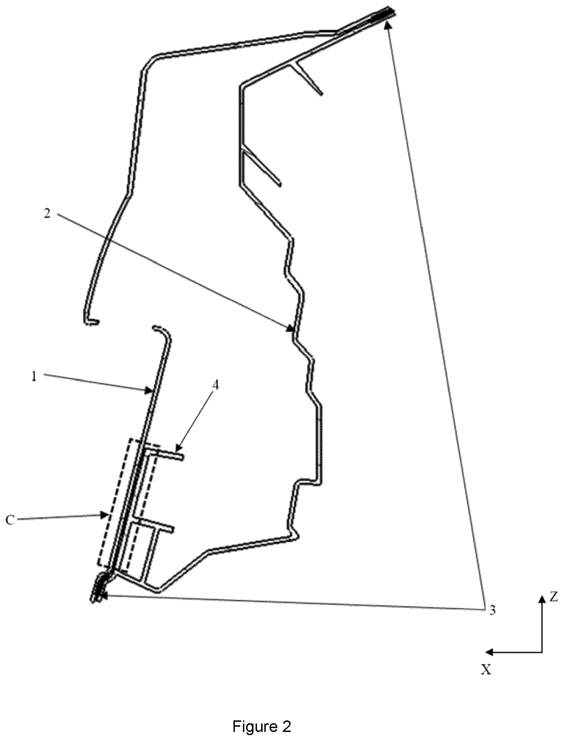

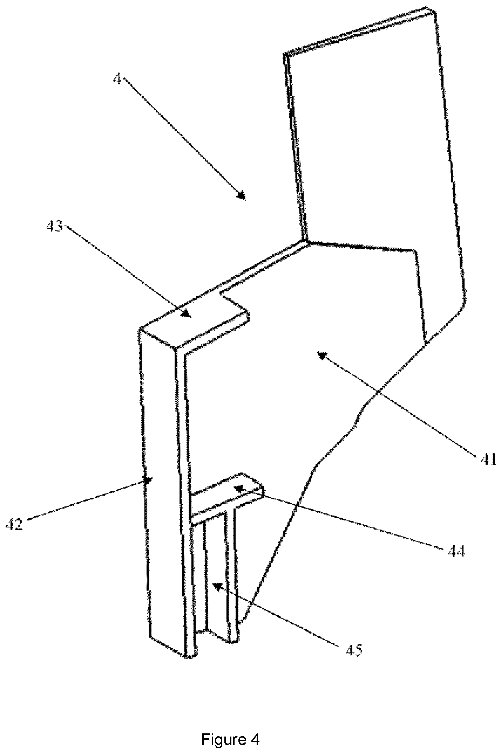

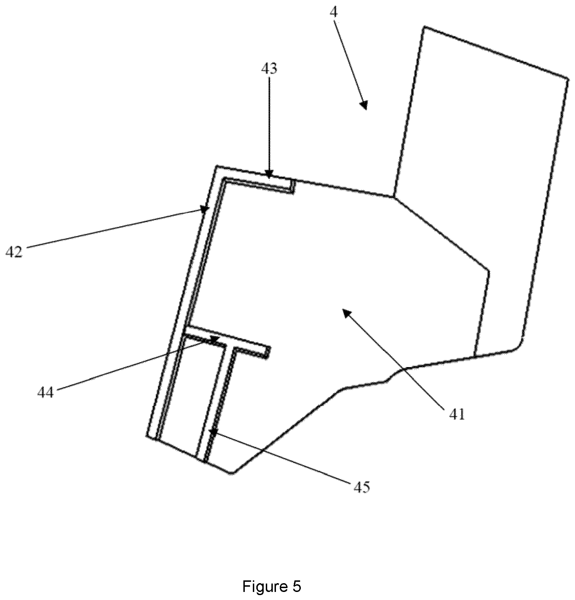

As shown in Figures 1 to 3, an embodiment of the invention provides a plastic tailgate structure for automobile comprising a tailgate outer panel 1 and a tailgate inner panel 2, the tailgate outer panel 1 and the tailgate inner panel 2 being joined together by a glue 3 on the perimeter. A cavity area being formed between the tailgate outer panel 1 and the tailgate inner panel 2. In order to increase the denting stiffness of this area and the overall modal behaviour of the plastic tailgate structure, a joining member 4 can be provided in the cavity area and on a surface of the tailgate inner panel. As illustrated in Figures 1-3, the joining member 4 is provided at a bottom end of the tailgate inner panel 2, and its two opposite ends in the X direction indicated in the figures are connected respectively with a main wall of the tailgate inner panel 2 and with the tailgate outer panel 1. As shown in Figure 4 and Figure 5, the joining member 4 comprises a first joining plate 41 and a second joining plate 42. The first joining plate 41 is provided mainly along the X direction, and used for joining the tailgate inner panel 2 and the second joining plate 42. The second joining plate 42 is integrally formed with the first joining plate 41 and connected with the first joining plate 41 at an end of the first joining plate 41 in the X direction, the two thus form a general L-shape with each other. An opposite end of the first joining plate 41 in the X direction is connected with the main wall of the tailgate inner panel 2. The second joining plate 42 is joined with the tailgate outer panel 1 by joining an outer side face of the second joining plate 42 with the tailgate outer panel 1. As shown in Figure 2, the C area is the joining area of the tailgate outer panel 1 with the second joining plate 42. Specifically, at first the tailgate outer panel 1 is disposed against the outer side face of the second joining plate 42, and then the two are joined with each other by means of a glue. Thus, in the cavity area, the tailgate outer panel 1 and the tailgate inner panel 2 can be joined by means of the joining member 4, thus increasing the denting stiffness of this area and increasing the tailgate structure's overall modal behaviour.

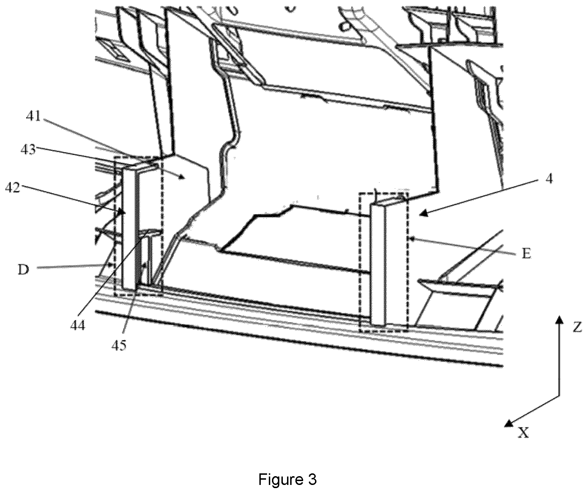

The joining member 4 is further provided with at least one reinforcement rib used for reinforcing the strength of the joining member 4. Figures 3-5 show an example having a first reinforcing rib 43 and a second reinforcing rib 44 each of which is connected with the first joining plate 41 and the second joining plate 42, but the number and the arrangement of the at least one reinforcement rib are not limited to the illustrative example.

The joining member 4 is further provided with at least one more joining plate in addition to the first joining plate 41 and the second joining plate 42. Figures 3-5 show an example having a third joining plate 45 arranged along the Z direction indicated in Figures 1-3, and its two ends in the Z direction are connected respectively with the second reinforcement rib 44 and with the bottom end of the tailgate inner panel 2. It should be understood that the number and the arrangement of the at least one more joining plate are not limited to the illustrative example. Thus, the strength of the joining member 4 can be increased, thus further improving the denting stiffness in the cavity area.

As shown in Figure 3, two joining members 4 can be provided. The two joining members 4 are provided symmetrically. The D and E areas are the areas of the two joining members 4 that have the first reinforcing rib 43, the second reinforcing rib 44 and the third joining plate 45. The D and E areas of the two joining members 4 have symmetrical structures. By providing two joining members 4, the denting stiffness and modal behaviour of the plastic tailgate structure can be further improved.

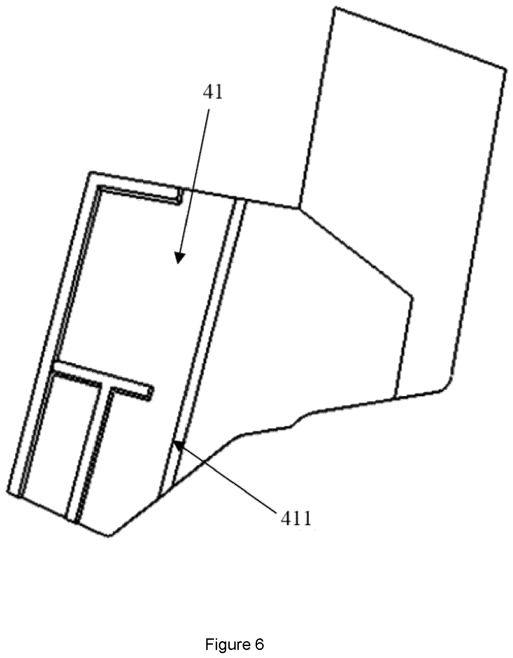

As shown in Figure 6, preferably, the joining member 4 can undergo a thinning treatment, i.e., a first weak area 411 is provided on the first joining plate 41 and the thickness of the plastic material of the weak area 411 is smaller than that of the rest of the first joining plate 41. Thus, when a high speed collision happens, the joining member 4 can easily break along the weak area 411, reducing the degree of damage to the tailgate inner panel 2 and thus performing a function of energy absorption.

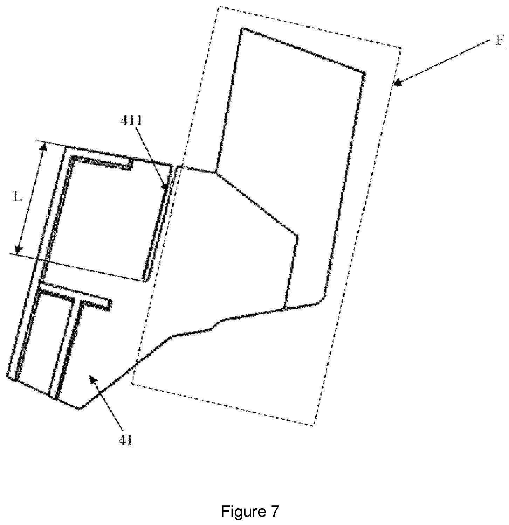

According to a variant shown in Figure 7, the first joining plate 41 is locally cut open in the weak area 411 to interrupt at this area. The plastic material of the first joining plate 41 is thus no longer continuous in the weak area 411. Especially, the weak area 411 shown in the Figure 7 is in a groove shape, which means some plastic material is removed when cutting. The weak area 411 does not necessarily run through the first joining plate 41 and the length L of the weak area 411 can be adjusted according to needs. For example, as shown in Figure 7, the weak area 411 does not extend all the way to reach the foot end of the first joining plate 41. As a result, the first joining plate 41 can break more easily along the weak area 411 upon a high speed collision of the automobile.

When the weak area 411 extends all the way to the foot end of the first joining plate 41 to almost run through it, the F area shown in Figure 7 will not play any role, and can be deleted. In this case, the first joining plate 41 is not connected with the main wall of the tailgate inner panel 2 at the end of the first joining plate 41 which is opposite to the second joining plate 42, and the joining member 4 can be connected with the tailgate inner panel 2 only by the foot end of the D/E area shown in Figure 3. In this way, the first joining plate 41 can be greatly reduced in size and in weight and occupies less space in the cavity area. In the meanwhile, surface quality problems at the joining between the first joining plate 41 and the main wall of the tailgate inner panel 2 such as surface shrinkage marks can be prevented.

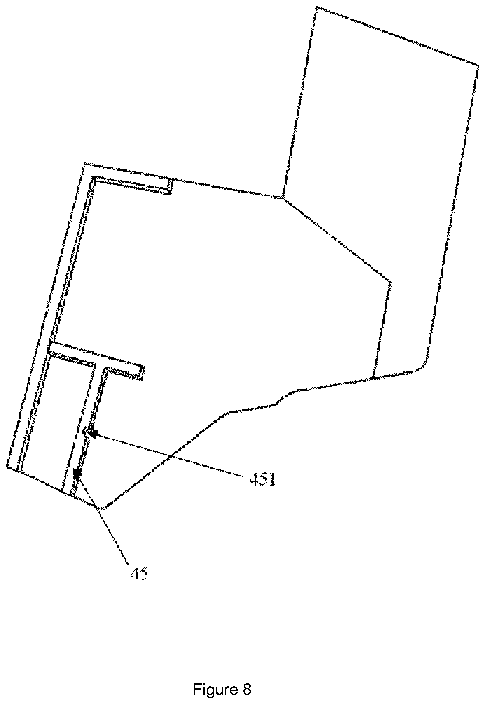

Preferably, the third joining plate 45 can be provided with a second weak area 451. According to an embodiment shown in Figure 8, the thickness of the weak area 451 is smaller than that of the rest of the third joining plate 45. Thus, when a high speed collision happens, the third joining plate 45 can easily break along the weak area 451, reducing the degree of damage to the tailgate inner panel 2 and thus performing a function of energy absorption.

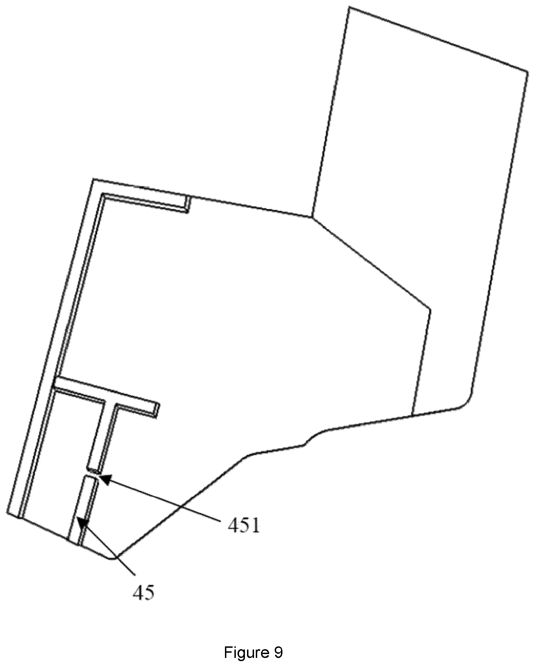

According to another embodiment shown in Figure 9, the third joining plate 45 is cut open to interrupt at the weak area 451. In the illustrative example, the plastic material is removed in the weak area 451, in other words, the thickness of the plastic material is reduced to be zero in the weak area 451. As a result, the third joining plate 45 can break more easily upon a high-speed collision and has a better effect of energy absorption.

However, it should be understood that the number and the arrangement of the weak area on the joining member 4 are not limited to the illustrative examples. In fact, the joining member 4 can be locally weakened, that is, thinned or cut open, at any suitable location and along any suitable direction.

The whole joining member 4 is preferably integrally formed with the tailgate inner panel 2. As the tailgate structure is generally plastic, preferably the joining member 4 is manufactured integrally with the tailgate inner panel 2 by one single injection moulding.

It should be noted that the plastic tailgate structure in the invention can also be applied to other required parts, i.e., the tailgate outer panel 1 and the tailgate inner panel 2 can be replaced with other parts that need to be joined together, for example the tailgate outer panel 1 can be replaced by a spoiler outer panel and a similar joining member can be provided between the tailgate inner panel and the spoiler outer panel, so as to increase the structure's denting stiffness and modal behaviour. The tailgate outer panel 1 can also be replaced by lateral upright outer panels of the tailgate. The invention is not limited to the above-mentioned examples.

In the plastic tailgate structure provided by the embodiment of the invention, by providing the joining member 4 in the cavity between the tailgate outer panel 1 and the tailgate inner panel 2, the two panels are further joined with each other in the cavity area, and the denting stiffness of the cavity area and the overall modal behaviour of the tailgate structure are increased. In the meanwhile, the surface of the tailgate inner panel is less occupied and the quality problems on the surface such as surface shrinkage marks are reduced. Besides, by providing the weak are on the joining member 4, when a collision happens, the joining member 4 can more easily break along the weak area, reducing the degree of damage to the tailgate inner panel 2 and thus performing a function of energy absorption.

### Embodiment 2:

This embodiment provides an automobile comprising the plastic tailgate structure described in Embodiment 1.

In the automobile provided by this embodiment, by using the plastic tailgate structure in Embodiment 1, the denting stiffness and modal behaviour of the automobile's tailgate are increased, and when a collision happens, the tailgate can perform a function of energy absorption, thus reducing the degree of damage to the tailgate.

What has been described above is merely preferred embodiments of the invention, and is not intended to limit the scope of the invention. Various changes may be further made to the foregoing embodiments of the invention. The scope of protection of the invention is defined by the subject-matter of the appended claims. What is not described in detail in the invention belongs to the conventional techniques of the art.

## Claims

1. A plastic tailgate structure for automobile, comprising an inner panel (2) and a cover part of the tailgate which are joined with each other, wherein on a surface of the inner panel (2) is provided a plastic joining member (4) comprising a first joining plate (41) connected with the inner panel (2) and a second joining plate (42) joined with the cover part of the tailgate, wherein the first joining plate (41) is integrally formed with the second joining plate (42) in a general L-shape with an almost right angle between them, **characterized in that** the joining member (4) is further provided with at least a first reinforcing rib (43) and a second reinforcing rib (44) which are both connected with the first joining plate (41) and the second joining plate (42), and **in that** the joining member (4) is further provided with at least a third joining plate (45), two opposite ends of the third joining plate (45) being connected respectively with the second reinforcing rib (44) and the inner panel (2).

2. The plastic tailgate structure according to the preceding claim, wherein the cover part of the tailgate joined with the inner panel (2) can be a tailgate outer panel (1), a spoiler outer panel or a lateral upright outer panel of the tailgate.

3. The plastic tailgate structure according to any one of the preceding claims, wherein the first joining plate (41) is joined with or integrally formed with the tailgate inner panel (2), preferably at a foot end of the first joining plate (41) and/or at an end of the first joining plate (41) which is opposite to the end of the first joining plate (41) where the first joining plate (41) is connected with the second joining plate (42).

4. The plastic tailgate structure according to any one of the preceding claims, wherein the first joining plate (41) is joined with the tailgate inner panel (2) by gluing, or the first joining plate (41) is integrally formed with the tailgate inner panel (2) by moulding.

5. The plastic tailgate structure according to any one of the preceding claims, wherein the second joining plate (42) is joined with the cover part of the tailgate by gluing.

6. The plastic tailgate structure according to any one of the preceding claims, wherein the thickness of the joining member (4) is smaller than that of a main wall of the inner panel (2).

7. The plastic tailgate structure according to any one of the preceding claims, wherein the joining member (4) comprises at least one weak area which is a local area where the joining member (4) is thinned or cut open.

8. The plastic tailgate structure according to the preceding claim, wherein the first joining plate (41) is thinned in a first weak area (411) where the first joining plate (41) is connected with the inner panel (2).

9. The plastic tailgate structure according to claim 1, wherein the third joining plate (45) comprises a weak area (451) which is a local area where the third joining plate (45) is thinned or cut open over at least a part of the width of the third joining plate (45).

10. The plastic tailgate structure according to any one of the preceding claims, wherein the number of the joining member (4) is two and they are provided symmetrically at two sides of the inner panel (2).

11. An automobile, comprising the plastic tailgate structure according to any one of the preceding claims.

## Patentansprüche

1. Kunststoff-Heckklappenstruktur für ein Kraftfahrzeug, die eine Innenverkleidung (2) und ein Abdeckteil der Heckklappe aufweist, die miteinander verbunden sind, wobei auf einer Oberfläche der Innenverkleidung (2) ein Kunststoff-Verbindungselement (4) vorgesehen ist, das eine erste Verbindungsplatte (41), die mit der Innenverkleidung (2) verbunden ist, und eine zweite Verbindungsplatte (42), die mit dem Abdeckteil der Heckklappe verbunden ist, aufweist,
wobei die erste Verbindungsplatte (41) einstückig mit der zweiten Verbindungsplatte (42) in einer allgemeinen L-Form mit einem nahezu rechten Winkel zwischen ihnen ausgebildet ist,
**dadurch gekennzeichnet, dass** das Verbindungselement (4) ferner mit mindestens einer ersten Verstärkungsrippe (43) und einer zweiten Verstärkungsrippe (44) versehen ist, die beide mit der ersten Verbindungsplatte (41) und der zweiten Verbindungsplatte (42) verbunden sind, und dass das Verbindungselement (4) ferner mit mindestens einer dritten Verbindungsplatte (45) versehen ist, wobei zwei gegenüberliegende Enden der dritten Verbindungsplatte (45) mit der zweiten Verstärkungsrippe (44) beziehungsweise der Innenverkleidung (2) verbunden sind.

2. Kunststoff-Heckklappenstruktur nach dem vorhergehenden Anspruch, wobei das mit der Innenverkleidung (2) verbundene Abdeckteil der Heckklappe eine Heckklappenaußenplatte (1), eine Spoileraußenplatte oder eine seitliche aufrechte Außenplatte der Heckklappe sein kann.

3. Kunststoff-Heckklappenstruktur nach einem der vorhergehenden Ansprüche, wobei die erste Verbindungsplatte (41) mit der Heckklappen-Innenverkleidung (2) verbunden oder einstückig mit dieser ausgebildet ist, vorzugsweise an einem Fußende der ersten Verbindungsplatte (41) und/oder an einem Ende der ersten Verbindungsplatte (41), das dem Ende der ersten Verbindungsplatte (41) gegenüberliegt, an dem die erste Verbindungsplatte (41) mit der zweiten Verbindungsplatte (42) verbunden ist.

4. Kunststoff-Heckklappenstruktur nach einem der vorhergehenden Ansprüche, wobei die erste Verbindungsplatte (41) mit der Innenverkleidung (2) der Heckklappe durch Kleben verbunden ist oder die erste Verbindungsplatte (41) mit der Innenverkleidung (2) der Heckklappe durch Formgebung einstückig ausgebildet ist.

5. Kunststoff-Heckklappenstruktur nach einem der vorhergehenden Ansprüche, wobei die zweite Verbindungsplatte (42) mit dem Abdeckteil der Heckklappe durch Verkleben verbunden ist.

6. Kunststoff-Heckklappenstruktur nach einem der vorhergehenden Ansprüche, wobei die Dicke des Verbindungselements (4) geringer ist als die einer Hauptwand der Innenverkleidung (2).

7. Kunststoff-Heckklappenstruktur nach einem der vorhergehenden Ansprüche, wobei das Verbindungselement (4) mindestens einen schwachen Bereich aufweist, der ein lokaler Bereich ist, in dem das Verbindungselement (4) ausgedünnt oder aufgeschnitten ist.

8. Kunststoff-Heckklappenstruktur nach dem vorhergehenden Anspruch, wobei die erste Verbindungsplatte (41) in einem ersten schwachen Bereich (411), in dem die erste Verbindungsplatte (41) mit der Innenverkleidung (2) verbunden ist, verdünnt ist.

9. Kunststoff-Heckklappenstruktur nach Anspruch 1, wobei die dritte Verbindungsplatte (45) einen schwachen Bereich (451) aufweist, der ein lokaler Bereich ist, in dem die dritte Verbindungsplatte (45) über mindestens einen Teil der Breite der dritten Verbindungsplatte (45) ausgedünnt oder aufgeschnitten ist.

10. Kunststoff-Heckklappenstruktur nach einem der vorhergehenden Ansprüche, wobei die Anzahl der Verbindungselemente (4) zwei beträgt und sie symmetrisch an zwei Seiten der Innenverkleidung (2) vorgesehen sind.

11. Kraftfahrzeug, das die Kunststoff-Heckklappenstruktur nach einem der vorhergehenden Ansprüche aufweist.

## Revendications

1. Structure en plastique de hayon pour automobile, comprenant un panneau intérieur (2) et une partie de couverture du hayon qui sont assemblés l'un à l'autre, dans laquelle sur une surface du panneau intérieur (2) est prévu un élément d'assemblage (4) en plastique comprenant une première plaque d'assemblage (41) reliée au panneau intérieur (2) et une seconde plaque d'assemblage (42) assimilée à la partie de couverture du hayon, dans laquelle la première plaque d'assemblage (41) est intégralement formée avec la deuxième plaque d'assemblage (42) en une forme générale en L, avec un angle presque droit entre elles, caract é ris é e en ce que l'élément d'assemblage (4) est en outre muni d'au moins une première nervure de renfort (43) et d'une deuxième nervure de renfort (44) qui sont toutes les deux reliées à la première plaque d'assemblage (41) et à la deuxième plaque d'assemblage (42), et en ce que l'élément d'assemblage (4) est en outre muni d'au moins une troisième plaque d'assemblage (45), les deux extrémités opposées de la troisième plaque d'assemblage (45) étant reliées respectivement à la deuxième nervure de renfort (44) et au panneau intérieur (2).

2. Structure en plastique de hayon selon la revendication précédente, dans laquelle la partie de couverture du hayon assemblée au panneau intérieur (2) peut être un panneau extérieur (1) de hayon, un panneau extérieur de spoiler ou un panneau extérieur latéral montant du hayon.

3. Structure en plastique de hayon selon l'une quelconque des revendications précédentes, dans laquelle la première plaque d'assemblage (41) est assemblée ou formée intégralement avec le panneau intérieur (2) du hayon, de préférence à une extrémité de pied de la première plaque d'assemblage (41) et/ou à une extrémité de la première plaque d'assemblage (41) qui est opposée à l'extrémité de la première plaque d'assemblage (41) où la premiè re plaque d'assemblage (41) est reliée à la seconde plaque d'assemblage (42).

4. Structure en plastique de hayon selon l'une quelconque des revendications précédentes, dans laquelle la première plaque d'assemblage (41) est assemblée au panneau intérieur (2) du hayon par collage, ou la première plaque d'assemblage (41) est formée intégralement avec le panneau intérieur (2) du hayon par moulage.

5. Structure en plastique de hayon selon l'une quelconque des revendications précédentes, dans laquelle la deuxième plaque d'assemblage (42) est assemblée à la partie de couverture du hayon par collage.

6. Structure en plastique de hayon selon l'une quelconque des revendications précédentes, dans laquelle l'épaisseur de l'élément d'assemblage (4) est inférieure à celle d'une paroi principale du panneau intérieur (2).

7. Structure en plastique de hayon selon l'une quelconque des revendications précédentes, dans laquelle l'élément d'assemblage (4) comprend au moins une zone faible qui est une zone locale où l'élément d'assemblage (4) est aminci ou évidé.

8. Structure en plastique de hayon selon la revendication précédente, dans laquelle la première plaque d'assemblage (41) est amincie dans une première zone faible (411) où la première plaque d'assemblage (41) est reliée au panneau intérieur (2).

9. Structure en plastique de hayon selon la revendication 1, dans laquelle la troisième plaque d'assemblage (45) comprend une zone faible (451) qui est une zone locale où la troisième plaque d'assemblage (45) est amincie ou évidée sur au moins une partie de la largeur de la troisi è me plaque d'assemblage (45).

10. Structure en plastique de hayon selon l'une quelconque des revendications précédentes, dans laquelle il y a deux éléments d'assemblage (4) et ils sont arrangés symétriquement sur les deux côtés du panneau intérieur (2).

11. Automobile, comprenant la structure en plastique de hayon selon l'une quelconque des revendications précédentes.
